# EUROPEAN PATENT SPECIFICATION

(11) **EP 4 398 551 B1**
(45) Date of publication and mention of the grant of the patent: **26.11.2025**
(21) Application number: 22891397.6
(22) Date of filing: 18.05.2022
(51) Int. Cl.: H04L 65/60, H04N 21/2187, H04N 21/231, H04N 21/2318, H04L 65/612, H04L 65/65, H04L 65/80, H04N 21/262, H04N 21/845, H04N 21/6547

(54) **STREAMING MEDIA SCHEDULING METHOD AND APPARATUS, AND READABLE STORAGE MEDIUM**
VERFAHREN UND VORRICHTUNG ZUR STREAMING-MEDIENPLANUNG UND LESBARES SPEICHERMEDIUM
PROCÉDÉ ET APPAREIL DE PROGRAMMATION DE DIFFUSION EN CONTINU DE CONTENU MULTIMÉDIA, ET SUPPORT DE STOCKAGE LISIBLE

(30) Priority: 11.11.2021 CN 202111333353
(43) Date of publication of application: 10.07.2024
(73) Proprietor: Huawei Cloud Computing Technologies Co., Ltd., Guizhou 550025 (CN)
(72) Inventor: SHAN, Weihua, Guizhou 550025 (CN); YAN, Dashuai, Guizhou 550025 (CN)
(74) Representative: MERH-IP Matias Erny Reichl Hoffmann Patentanwälte PartG mbB
(86) International application number: PCT/CN2022/093466
(87) International publication number: WO 2023/082587

(56) References cited:
- EP-A1- 2 897 340
- EP-B1- 2 934 006
- CN-A- 101 141 627
- CN-A- 102 131 114
- CN-A- 103 685 263
- CN-A- 104 168 516
- CN-A- 110 300 308
- US-A1- 2017 187 986

## Description

### TECHNICAL FIELD

The present invention relates to the field of communication technologies, and in particular, to a streaming media scheduling method and apparatus, and a readable storage medium.

### BACKGROUND

Hyper-text-transfer-protocol-based adaptive bitrate streaming media transfer protocol is a streaming media network transfer protocol. Hyper text transfer protocol live streaming (HLS) allows one piece of streaming media data to be divided into a plurality of segments of streaming media. For example, in a live streaming service, one channel of streaming media live streaming may be divided into a plurality of segments and a corresponding streaming media playlist may be generated by using HLS. When a streaming media client starts one streaming media session, the streaming media client first obtains a streaming media playlist file by using a content delivery network (content delivery network, CDN) server, then requests corresponding segments based on content in the playlist, and then completes locally playing streaming media based on the segments of the streaming media.

However, in a scenario (for example, a live streaming of a large release conference) with relatively high streaming media access concentration, a large quantity of streaming media clients simultaneously obtain segments of streaming media. Because a user scale that a CDN server can bear is limited, simultaneously obtaining the segments of the streaming media by the large quantity of streaming media clients causes phenomena such as frame freezing and frame loss to occur when the streaming media clients play streaming media content. This greatly affects user experience.

Document EP 2 897 340 A1 generally discloses a method for providing chunked content to a device comprising a streaming client, preferably an HTTP adaptive streaming client, wherein said chunked content is defined on the basis of a manifest file comprising one or more chunk identifiers and one or more associated chunk locators for locating one or more delivery nodes configured to deliver one or more chunks identified by said chunk identifiers, and wherein said method comprises: determining whether a chunk identified by a chunk identifier in a chunk request message originating from said client can be delivered by a first delivery node, said chunk request message comprising a first network address associated with said first delivery node, preferably said first network address comprising at least part of an IP address, an URL, or an equivalent thereof; if said first delivery node cannot deliver said chunk to said client, rewriting said first network address in said chunk request message into a second network address associated with a delivery node that is capable of delivering said chunk before sending said chunk request message to said second delivery node; and, before sending a chunk response message associated with said chunk request message to said streaming client, rewriting the second network address in said response message into said first network address.
Document EP 2 934 006 B1 generally discloses a method for monitoring streaming video content. Content Delivery Network (CDN) feed sent over one or more CDNs is monitored and analyzed using a first soft probe deployed in the one or more CDNs to generate a first video session record. Video traffic sent over a packet core network (PCN) is monitored and analyzed using a second soft probe deployed in the PCN to generate a second video session record. A third session record is generated by correlating the first session record to the second session record. The third session record corresponds to an end-to-end video streaming session. One or more performance characteristics corresponding to the end-to-end video streaming session are generated based at least in part on the third session record.

### SUMMARY

The present invention provides a streaming media scheduling method and apparatus, and a readable storage medium, to reduce a probability that frame freezing and frame loss occur when a streaming media client plays streaming media content. To achieve the foregoing objective, the following technical solutions are used in the present invention. In particular, the present invention provides streaming media scheduling methods, corresponding streaming media scheduling apparatuses, a computer-readable storage medium and a computer program product, having the features of respective independent claims. The dependent claims relate to preferred embodiments.

According to a first aspect, the present invention provides a streaming media scheduling method, and the method includes: A streaming media server first receives a play request that is for one channel of streaming media and that is sent by a client. The streaming media server selects N streaming media buffer nodes from M streaming media buffer nodes that buffer segments of the streaming media. Then the streaming media server sends a streaming media playlist to the client. M is greater than N. When N is 1, the one selected streaming media buffer node buffers all segments of the streaming media. When N is greater than 1, the N selected streaming media buffer nodes each buffer a part of segments of the streaming media. The streaming media playlist includes addresses of the N streaming media buffer nodes, and the streaming media playlist indicates the client to obtain the segments of the streaming media based on the addresses of the N streaming media buffer nodes to play the streaming media.

For example, one video open class whose duration is 60 minutes may be divided into 60 segments whose duration is 1 minute, and the 60 segments may be stored in the streaming media server and 100 streaming media buffer nodes. After receiving a play request that is for the video open class and that is sent by the client, the streaming media server may first select 10 streaming media buffer nodes from the 100 streaming media buffer nodes that buffer the segments of the video open class, and then send a streaming media playlist to the client to indicate the client to obtain the 60 segments of the video open class from addresses of the 10 streaming media buffer nodes to play the video open class.

In a scenario (for example, a live streaming of a large release conference) with relatively high streaming media access concentration, a large quantity of streaming media clients simultaneously obtain segments of streaming media. Because a user scale that a streaming media server (for example, a CDN server) can bear is limited, simultaneously obtaining the segments of the streaming media by the large quantity of streaming media clients causes phenomena such as frame freezing and frame loss to occur when the streaming media clients play streaming media content. In the method provided by the present invention, after receiving the play request that is for the one channel of streaming media and that is sent by the client, the streaming media server does not directly indicate the client to obtain the segments of the streaming media based on the address of the streaming media server, but first selects the N streaming media buffer nodes from the M streaming media buffer nodes that buffer the segments of the streaming media, and then sends the streaming media playlist to the client to indicate the client to obtain the segments of the streaming media based on the addresses of the N streaming media buffer nodes to play the streaming media. This prevents a large quantity of clients from simultaneously obtaining the segments of the streaming media from the streaming media server, so that frame freezing and frame loss can be avoided when the streaming media clients play streaming media content. In a process in which the streaming media server selects the streaming media buffer node, no additional signaling needs to be exchanged between the streaming media server and the client, so that the client is unaware of the event. This improves user experience.

In a possible implementation, the method may further include: The streaming media server determines K other clients that buffer other segments of the streaming media, where the streaming media playlist further includes addresses of the K other clients, and the streaming media playlist indicates the client to obtain all segments of the streaming media based on the addresses of the N streaming media buffer nodes and the addresses of the K other clients to play the streaming media.

For example, one video open class whose duration is 60 minutes may be divided into 60 segments whose duration is 1 minute, and the 60 segments may be stored in the streaming media server, 100 streaming media buffer nodes, and 300 clients. After receiving a play request that is for the video open class and that is sent by the client, the streaming media server may first select 10 streaming media buffer nodes from the 100 streaming media buffer nodes that buffer the segments of the video open class, select 20 other clients from the 300 other clients that buffer the segments of the video open class and that are other than the client that sends the request, and then send a streaming media playlist to the client to indicate the client to obtain the 60 segments of the video open class from addresses of the 10 streaming media buffer nodes and addresses of the 20 other clients to play the video open class.

It can be seen that, the streaming media server may not only indicate the client to obtain the segments of the streaming media based on the address of the streaming media buffer node to play the streaming media, but also indicate the client to obtain the segments of the streaming media based on the addresses of the other clients to play the streaming media. This further prevents a large quantity of clients from simultaneously obtaining the segments of the streaming media from the streaming media server, so that frame freezing and frame loss can be avoided when the streaming media clients play streaming media content.

In a possible implementation, the N streaming media buffer nodes buffer all segments of the streaming media, and the streaming media playlist indicates the client to obtain all segments of the streaming media based on the addresses of the N streaming media buffer nodes to play the streaming media.

Optionally, M, N, and K are all positive integers.

For example, M may be 100, N may be 10, and K may be 300.

In a possible implementation, the selecting N streaming media buffer nodes from M streaming media buffer nodes that buffer segments of the streaming media includes: selecting, based on status information of the M streaming media buffer nodes, N streaming media buffer nodes from the M streaming media buffer nodes that buffer the segments of the streaming media, where the status information includes at least one of load information, memory utilization, an available memory, storage space utilization, an available storage space, a network type, or streaming media segment storage information. The network type indicates a network type (for example, a dedicated network) of the streaming media buffer node, and the streaming media segment storage information indicates a specific segment of the streaming media stored in the streaming media buffer node.

It can be seen that, when selecting the streaming media buffer node, the streaming media server may select a streaming media buffer node in a relatively good state based on status information of the streaming media buffer node, so that the client obtains a segment of the streaming media based on an address of the streaming media buffer node in the relatively good state to play the streaming media. This prevents the client from obtaining a segment of the streaming media based on an address of a streaming media buffer node in a relatively poor state to play the streaming media, so that frame freezing and frame loss can be avoided when the clients play streaming media content.

In another possible implementation, the selecting N streaming media buffer nodes from M streaming media buffer nodes that buffer segments of the streaming media includes: selecting N streaming media buffer nodes with lowest load rates from the M streaming media buffer nodes that buffer the segments of the streaming media, where when N is 1, a load rate of the one selected streaming media buffer node is the lowest in the M streaming media buffer nodes, or when N is greater than 1, a load rate of each streaming media buffer node in the N selected streaming media buffer nodes is the lowest in the streaming media buffer nodes that each buffer a part of segments of the streaming media.

For example, one video open class whose duration is 60 minutes may be divided into 60 segments whose duration is 1 minute, and the 60 segments may be stored in the streaming media server and 100 streaming media buffer nodes. A streaming media buffer node A is a node with a lowest load rate in the 100 streaming media buffer nodes. After receiving a play request that is for the video open class and that is sent by the client, the streaming media server may first select the node with the lowest load rate, namely, the streaming media buffer node A, from the 100 streaming media buffer nodes that buffer the segments of the video open class, and then send a streaming media playlist to the client to indicate the client to obtain the 60 segments of the video open class based on an address of the media buffer node A to play the video open class.

It may be understood that, the client is indicated to obtain the segments of the streaming media based on the addresses of the N streaming media buffer nodes with the lowest load rate to play the streaming media, to prevent the client from obtaining the segment of the streaming media by using a streaming media buffer node with a relatively high load rate, so that phenomena such as frame freezing and frame loss can be avoided when the streaming media clients play the streaming media content. This further improves user experience.

In still another possible implementation, the selecting N streaming media buffer nodes from M streaming media buffer nodes that buffer segments of the streaming media includes: selecting, based on status information of the M streaming media buffer nodes and attribute information of the M streaming media buffer nodes, N streaming media buffer nodes from the M streaming media buffer nodes that buffer the segments of the streaming media.

Optionally, the foregoing attribute information includes at least one of an inter-node address, attribute parameter information, or streaming media segment content information. The inter-node address may include an Internet Protocol version 4 (internet protocol version 4, IPv4) address and a port number, and an Internet Protocol version 6 (internet protocol version 6, IPv6) address and a port number. The attribute parameter information may include a network address translation (network address translation, NAT) type, an operator, a network type, and available space of a memory and a disk. The streaming media segment content information may include update time of the segment of the streaming media and load of the node.

For example, one video open class whose duration is 60 minutes may be divided into 60 segments whose duration is 1 minute, and the 60 segments may be stored in the streaming media server and 100 streaming media buffer nodes. After receiving a play request that is for the video open class and that is sent by the client, the streaming media server may first select 30 streaming media buffer nodes whose network types are dedicated networks from the 100 streaming media buffer nodes that buffer the segments of the video open class, then select 10 streaming media buffer nodes whose load rates are the lowest from the 30 streaming media buffer nodes whose network types are the dedicated networks, and then send a streaming media playlist to the client to indicate the client to obtain the 60 segments of the video open class from addresses of the 10 streaming media buffer nodes to play the video open class.

For another example, one video open class whose duration is 60 minutes may be divided into 60 segments whose duration is 1 minute, and the 60 segments may be stored in the streaming media server and 100 streaming media buffer nodes. After receiving a play request that is for the video open class and that is sent by the client, the streaming media server may first select 70 streaming media buffer nodes that support IPv6 from the 100 streaming media buffer nodes that buffer the segments of the video open class, then select 20 streaming media buffer nodes with lowest load rates from the 70 streaming media buffer nodes that supports IPv6, and then send a streaming media playlist to the client to indicate the client to obtain the 60 segments of the video open class from addresses of the 20 streaming media buffer nodes to play the video open class.

Optionally, N may be equal to a quantity of segments of the streaming media.

For example, if a video open class includes 60 segments, the streaming media server needs to select 60 streaming media buffer nodes from M streaming media buffer nodes that buffer the segments of the video open class.

It may be understood that, when N is equal to the quantity of segments of the streaming media, the client downloads in parallel different segments by using different streaming media buffer nodes, so that time required by the client to download the segments is shortened. This further improves user experience. For example, a live video includes three segments with sizes of 1 megabyte (MB). If the client simultaneously downloads the three segments from a same streaming media buffer node whose bandwidth is 10 megabytes per second (Mbps), required download time is 2.4 seconds. However, if the client downloads one segment from each of three different streaming media buffer nodes whose bandwidths are all 10 Mbps, required download time is only 0.8 seconds. It can be seen that the time required for downloading the segments is significantly reduced.

Optionally, the streaming media buffer node may store the segments of the streaming media in a distributed storage manner. For example, each streaming media buffer node or each streaming media buffer node set may store only one segment of same streaming media content. The streaming media buffer nodes include a streaming media buffer node A, a streaming media buffer node B, and a streaming media buffer node C, and streaming media content 1 includes a segment 1, a segment 2, and a segment 3. A size of each segment is 1 MB. If each streaming media buffer node stores all segments of the streaming media content 1, a size of required storage space is 3 MB. However, if each streaming media buffer node stores only one segment of the streaming media content 1, a size of required storage space is only 1 MB. For example, the streaming media buffer node A stores the segment 1 of the streaming media, the streaming media buffer node B stores the segment 2 of the streaming media, and the streaming media buffer node C stores the segment 3 of the streaming media.

According to a second aspect, the present invention further provides another streaming media scheduling method, and the method includes: A client first receives target information sent by a streaming media server, where the target information includes attribute information of M streaming media buffer nodes, and then the client downloads a plurality of segments of streaming media based on the attribute information of the M streaming media buffer nodes.

In conventional technologies, the client can download the segments of the streaming media based only on an address of a streaming media buffer node indicated by a streaming media playlist. However, in the streaming media scheduling method provided by the present invention, the client may independently select attribute information of the streaming media buffer node based on obtained attribute information of the streaming media buffer node to download the segments of the streaming media. This prevents the client from downloading the segment of the streaming media by using a streaming media buffer node when the streaming media buffer node is in a relatively poor state, so that frame freezing and frame loss can be avoided when the clients play streaming media content.

Optionally, the foregoing attribute information includes at least one of an inter-node address, attribute parameter information, or streaming media segment content information. The inter-node address may include an Internet Protocol version 4 (internet protocol version 4, IPv4) address and a port number, and an Internet Protocol version 6 (internet protocol version 6, IPv6) address and a port number. The attribute parameter information may include a network address translation (network address translation, NAT) type, an operator, a network type, and available space of a memory and a disk. The streaming media segment content information may include update time of the segment of the streaming media and load of the node.

In a possible implementation, the target information further includes a streaming media playlist, and the downloading a plurality of segments of streaming media based on the attribute information of the M streaming media buffer nodes includes: downloading the plurality of segments based on the streaming media playlist and the attribute information of the M streaming media buffer nodes. The streaming media playlist includes addresses of N streaming media buffer nodes, and the streaming media playlist indicates the client to obtain the segments of the streaming media based on the addresses of the N streaming media buffer nodes to play the streaming media.

In a possible implementation, the downloading the plurality of segments based on the streaming media playlist and the attribute information of the M streaming media buffer nodes includes: obtaining latencies between the client and the N streaming media buffer nodes based on the streaming media playlist; and downloading the plurality of segments based on the attribute information of the M streaming media buffer nodes when a latency between the client and any streaming media buffer node in the N streaming media buffer nodes is greater than a latency threshold.

In a possible implementation, the target information further includes attribute information of K other clients, and the downloading a plurality of segments of streaming media based on the attribute information of the M streaming media buffer nodes includes: downloading the plurality of segments based on the attribute information of the M streaming media buffer nodes and the attribute information of the K other clients.

Optionally, M, N, and K are all positive integers.

For example, M may be 100, N may be 10, and K may be 300.

According to a third aspect, the present invention further provides a streaming media scheduling apparatus, where the apparatus includes a processing unit, and the processing unit is configured to: receive a play request that is for one channel of streaming media and that is sent by a client; select N streaming media buffer nodes from M streaming media buffer nodes that buffer segments of the streaming media, where M is greater than N, and when N is 1, the one selected streaming media buffer node buffers all segments of the streaming media, or when N is greater than 1, the N selected streaming media buffer nodes each buffer a part of segments of the streaming media; and send a streaming media playlist to the client, where the streaming media playlist includes addresses of the N streaming media buffer nodes, and the streaming media playlist indicates the client to obtain the segments of the streaming media based on the addresses of the N streaming media buffer nodes to play the streaming media.

In a possible implementation, the processing unit is further configured to determine K other clients that buffer other segments of the streaming media, where the streaming media playlist further includes addresses of the K other clients, and the streaming media playlist indicates the client to obtain all segments of the streaming media based on the addresses of the N streaming media buffer nodes and the addresses of the K other clients to play the streaming media.

In a possible implementation, the N streaming media buffer nodes buffer all segments of the streaming media, and the streaming media playlist indicates the client to obtain all segments of the streaming media based on the addresses of the N streaming media buffer nodes to play the streaming media.

Optionally, M, N, and K are all positive integers.

For example, M may be 100, N may be 10, and K may be 300.

In a possible implementation, the processing unit is specifically configured to select, based on status information of the M streaming media buffer nodes, N streaming media buffer nodes from the M streaming media buffer nodes that buffer the segments of the streaming media, where the status information includes at least one of load information, memory utilization, an available memory, storage space utilization, an available storage space, a network type, or streaming media segment storage information.

In another possible implementation, the processing unit is specifically configured to select N streaming media buffer nodes with lowest load rates from the M streaming media buffer nodes that buffer the segments of the streaming media, where when N is 1, a load rate of the one selected streaming media buffer node is the lowest in the M streaming media buffer nodes, or when N is greater than 1, a load rate of each streaming media buffer node in the N selected streaming media buffer nodes is the lowest in the streaming media buffer nodes that each buffer a part of segments of the streaming media.

In still another possible implementation, the processing unit is specifically configured to select, based on status information of the M streaming media buffer nodes and attribute information of the M streaming media buffer nodes, N streaming media buffer nodes from the M streaming media buffer nodes that buffer the segments of the streaming media, where the status information includes at least one of load information, memory utilization, an available memory, storage space utilization, an available storage space, a network type, or streaming media segment storage information, and the attribute information includes at least one of an inter-node address, attribute parameter information, or streaming media segment content information.

According to a fourth aspect, the present invention further provides another streaming media scheduling apparatus. The apparatus includes a processing unit and the processing unit is configured to: receive target information sent by a streaming media server, where the target information includes attribute information of M streaming media buffer nodes, and download a plurality of segments of streaming media based on the attribute information of the M streaming media buffer nodes, where the attribute information includes at least one of an inter-node address, attribute parameter information, or streaming media segment content information.

In a possible implementation, the target information further includes a streaming media playlist, and the processing unit is specifically configured to download the plurality of segments based on the streaming media playlist and the attribute information of the M streaming media buffer nodes. The streaming media playlist includes addresses of N streaming media buffer nodes, and the streaming media playlist indicates the client to obtain the segments of the streaming media based on the addresses of the N streaming media buffer nodes to play the streaming media.

In a possible implementation, the processing unit is specifically configured to: obtain latencies between the client and the N streaming media buffer nodes based on the streaming media playlist, and download the plurality of segments based on the attribute information of the M streaming media buffer nodes when a latency between the client and any streaming media buffer node in the N streaming media buffer nodes is greater than a latency threshold.

In a possible implementation, the target information further includes attribute information of K other clients, and the processing unit is specifically configured to download the plurality of segments based on the attribute information of the M streaming media buffer nodes and the attribute information of the K other clients.

Optionally, M, N, and K are all positive integers.

For example, M may be 100, N may be 10, and K may be 300.

According to a fifth aspect, the present invention further provides a streaming media scheduling apparatus. The apparatus includes at least one processor, and when the at least one processor executes program code or instructions, the method according to any one of the first aspect or the possible implementations of the first aspect.

Optionally, the electronic device may further include at least one memory, and the at least one memory is configured to store the program code or the instructions.

According to a sixth aspect, the present invention further provides a chip that includes an input interface, an output interface, and at least one processor. Optionally, the chip further includes a memory. The at least one processor is configured to execute code in the memory. When the at least one processor executes the code, the chip implements the method according to any one of the first aspect or the possible implementations of the first aspect.

Optionally, the chip may further be an integrated circuit.

According to a seventh aspect, the present invention further provides a computer-readable storage medium configured to store a computer program. The computer program includes instructions for implementing the method according to any one of the first aspect or the possible implementations of the first aspect.

According to an eighth aspect, the present invention further provides a computer program product that includes instructions. When the computer program product is run on a computer, the computer is enabled to implement the method according to any one of the first aspect or the possible implementations of the first aspect.

The streaming media scheduling apparatus, the computer storage medium, the computer program product, and the chip provided in embodiments are all configured to perform the streaming media scheduling method provided above. Therefore, for beneficial effects that can be achieved by the streaming media scheduling apparatus, the computer storage medium, the computer program product, and the chip, refer to the beneficial effects in the streaming media scheduling method provided above. Details are not described herein again.

### BRIEF DESCRIPTION OF DRAWINGS

To describe the technical solutions in embodiments of the present invention more clearly, the following briefly describes the accompanying drawings used in describing embodiments. It is clear that the accompanying drawings in the following descriptions are merely some embodiments of the present invention, and a person of ordinary skill in the art may still derive other drawings from these accompanying drawings without creative efforts.
FIG. 1 is a schematic diagram of a structure of a communication system according to an embodiment of the present invention;
FIG. 2 is a schematic flowchart of a streaming media scheduling method according to an embodiment of the present invention;
FIG. 3 is a schematic diagram of a topology relationship between devices according to an embodiment of the present invention;
FIG. 4 is a schematic flowchart of another streaming media scheduling method according to an embodiment of the present invention;
FIG. 5 is a schematic diagram of a structure of an apparatus according to an embodiment of the present invention;
FIG. 6 is a schematic diagram of a structure of another apparatus according to an embodiment of the present invention; and
FIG. 7 is a schematic diagram of a structure of a chip according to an embodiment of the present invention.

### DESCRIPTION OF EMBODIMENTS

The following clearlydescribes the technical solutions in embodiments of the present invention with reference to the accompanying drawings in embodiments of the present invention. It is clear that the described embodiments are merely a part rather than all of embodiments of the present invention.

The term "and/or" in this specification describes only an association relationship between associated objects and indicates that three relationships may exist. For example, A and/or B may indicate the following three cases: Only A exists, both A and B exist, and only B exists.

In this specification and accompanying drawings of the present invention, the terms "first", "second", and the like are intended to distinguish between different objects or distinguish between different processing of a same object, but do not indicate a particular order of the objects.

In addition, the terms "including", "having", or any other variant thereof in descriptions of the present invention are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be noted that, in descriptions of embodiments of the present invention, terms such as "example" or "for example" are used to represent giving an example, an illustration, or a description. Any embodiment or design scheme described as "example" or "for example" in embodiments of the present invention should not be explained as being more preferred or having more advantages than another embodiment or design scheme. Exactly, use of the word "example", "for example", or the like is intended to present a relative concept in a specific manner.

In descriptions of the present invention, unless otherwise specified, "a plurality of" means two or more than two.

In a scenario (for example, a live streaming of a large release conference) with relatively high streaming media access concentration, a large quantity of streaming media clients simultaneously obtain segments of streaming media. Because a user scale that a CDN server can bear is limited, simultaneously obtaining the segments of the streaming media by the large quantity of streaming media clients causes phenomena such as frame freezing and frame loss to occur when the streaming media clients play streaming media content. This greatly affects user experience.

Therefore, an embodiment of the present invention provides a streaming media scheduling method, to reduce a probability that frame freezing and frame loss occur when the streaming media client plays the streaming media content. The streaming media scheduling method may be applied to a communication system.

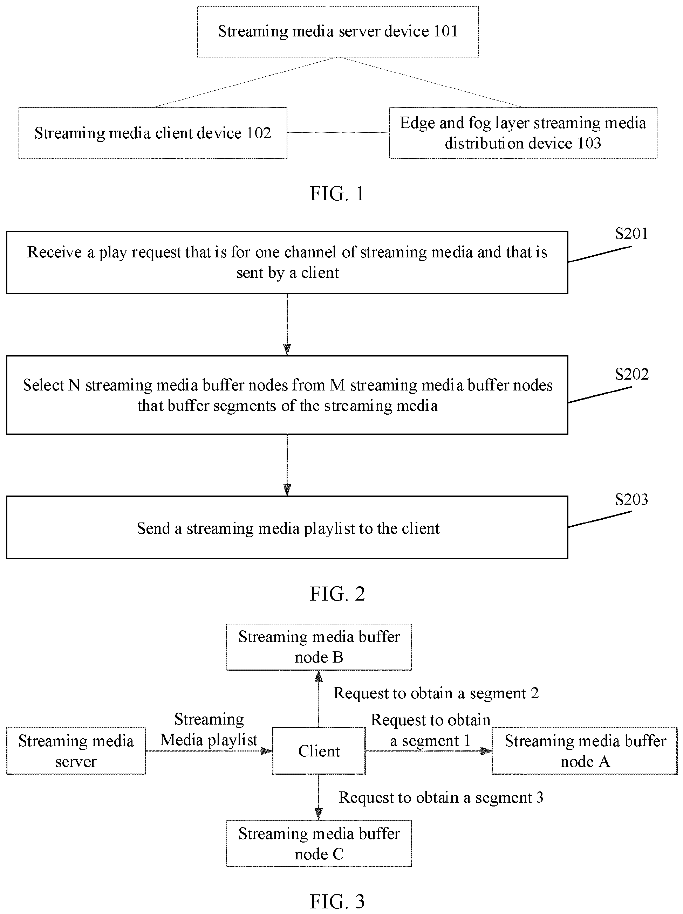

For example, FIG. 1 is a schematic diagram of a structure of a communication system 100 according to an embodiment of the present invention. A communication system may include a streaming media server device 101, a streaming media client device 102, and an edge and fog layer streaming media distribution device 103.

It may be understood that the structure shown in this embodiment of the present invention does not constitute a specific limitation on the communication system 100. **In** some other embodiments of the present invention, the communication system 100 may include more or fewer components than those shown in the figure, or some components may be combined, or some components may be split, or different component arrangements may be used. The components shown in the figure may be implemented by hardware, software, or a combination of software and hardware.

The streaming media server device 101 may be a server, a server cluster, or another device that has a computing function and a communication function. This embodiment of the present invention does not limit a specific type of the streaming media server device 101. The streaming media server device 101 may also be referred to as a streaming media server for short.

The streaming media client device 102 may be an electronic device such as a mobile phone, a tablet computer, a wearable device, a vehicle-mounted device, an augmented reality (augmented reality, AR) / virtual reality (virtual reality, VR) device, a notebook computer, an ultra-mobile personal computer (ultra-mobile personal computer, UMPC), a netbook, or a personal digital assistant (personal digital assistant, PDA). This embodiment of the present invention does not limit a specific type of the streaming media client device 102. The streaming media client device 102 may also be referred to as a client for short.

The edge and fog layer streaming media distribution device 103 may be an optical modem, a router, a home gateway, an optical line terminal (optical line terminal, OLT), or another device having a computing function and a communication function. A specific type of the edge and fog layer streaming media distribution device 103 is not limited in this embodiment of the present invention, and the edge and fog layer streaming media distribution device 103 may be referred to as a streaming media buffer node for short.

The streaming media server device 101, the streaming media client device 102, and the edge and fog layer streaming media distribution device 103 may communicate with each other by using a communication technology.

In a possible implementation, the streaming media server device 101, the streaming media client device 102, and the edge and fog layer streaming media distribution device 103 may communicate with each other in a wireless manner.

It should be noted that, communication in the wireless manner may be implemented by using a communication network. The communication network may be a local area network, or may be a wide area network switched by using a relay device, or may include a local area network and a wide area network. When the communication network is the local area network, for example, the communication network may be a Wi-Fi hotspot network, a Wi-Fi P2P network, a Bluetooth network, a ZigBee network, a near field communication (near field communication, NFC) network, a future possible universal short range communication network, or a dedicated short range communication (dedicated short range communication, DSRC) network. When the communication network is a wide area network, an example of example, the communication network may be a 3rd-generation mobile communication technology (3rd-generation mobile communication technology, 3G) network, a 4th-generation mobile communication technology (4th-generation mobile communication technology, 4G) network, a 5th-generation mobile communication technology (5th-generation mobile communication technology, 5G) network, a PLMN, or the Internet. This is not limited in this embodiment of the present invention.

For example, the communication system 100 may be a multicast network, an application layer multicast network, or a streaming media application layer multicast network.

The following describes in detail the streaming media scheduling method provided in an embodiment of the present invention with reference to the accompanying drawings. As shown in FIG. 2, the streaming media scheduling method provided in this embodiment of the present invention includes the following steps.

S201: A streaming media server receives a play request that is for one channel of streaming media and that is sent by a client.

For example, if a user wants to watch a video open class by using a mobile phone, the user taps an icon of a streaming media software development kit (software development kit, SDK) client on the mobile phone, starts the streaming media SDK client to display an interface of the streaming media SDK client, and then taps a video open class page in the interface. A CDN server receives, in response to the operation of the user, a play request that is for the video open class and that is sent by the mobile phone by using the streaming media SDK client.

S202: The streaming media server selects N streaming media buffer nodes from M streaming media buffer nodes that buffer segments of the streaming media.

M is greater than N. When N is 1, the one selected streaming media buffer node buffers all segments of the streaming media. When N is greater than 1, the N selected streaming media buffer nodes each buffer a part of segments of the streaming media.

For example, one video open class whose duration is 60 minutes may be divided into 60 segments whose duration is 1 minute, and the 60 segments may be stored in the streaming media server and 100 streaming media buffer nodes. After receiving a play request that is for the video open class and that is sent by the client, the streaming media server may select one streaming media buffer node that stores the 60 segments from the 100 streaming media buffer nodes that buffer the segments of the video open class, and then generate a streaming media playlist that includes an address of the one streaming media buffer node.

For another example, one video open class whose duration is 60 minutes may be divided into 60 segments whose duration is 1 minute, and the 60 segments may be stored in the streaming media server and 100 streaming media buffer nodes. After receiving a play request that is for the video open class and that is sent by the client, the streaming media server may select 10 streaming media buffer nodes from the 100 streaming media buffer nodes that buffer the segments of the video open class, and then generate a streaming media playlist that includes addresses of the 10 streaming media buffer nodes.

In a possible implementation, the streaming media server may further determine K other clients that buffer other segments of the streaming media.

For another example, one video open class whose duration is 60 minutes may be divided into 60 segments whose duration is 1 minute, and the 60 segments may be stored in the streaming media server, 100 streaming media buffer nodes, and 300 clients. After receiving a play request that is for the video open class and that is sent by the client, the streaming media server may first select 10 streaming media buffer nodes from the 100 streaming media buffer nodes that buffer the segments of the video open class, select 20 other clients from the 300 other clients that buffer the segments of the video open class and that are other than the client that sends the request, and then generate a streaming media playlist that includes addresses of the 10 streaming media buffer nodes and addresses of the 20 other clients.

It can be seen that, the streaming media server may not only indicate the client to obtain the segments of the streaming media based on the address of the streaming media buffer node to play the streaming media, but also indicate the client to obtain the segments of the streaming media based on the addresses of the other clients to play the streaming media. This further prevents a large quantity of clients from simultaneously obtaining the segments of the streaming media from the streaming media server, so that frame freezing and frame loss can be avoided when the streaming media clients play streaming media content.

Optionally, M, N, and K are all positive integers. For example, M may be 100, N may be 10, and K may be 300.

In a possible implementation, the streaming media server may select, based on status information of the M streaming media buffer nodes, N streaming media buffer nodes from the M streaming media buffer nodes that buffer the segments of the streaming media, where the status information includes at least one of load information, memory utilization, an available memory, storage space utilization, an available storage space, a network type, or streaming media segment storage information. The network type indicates a network type (for example, a dedicated network) of the streaming media buffer node, and the streaming media segment storage information indicates a specific segment of the streaming media stored in the streaming media buffer node.

It can be seen that, when selecting the streaming media buffer node, the streaming media server may select a streaming media buffer node in a relatively good state based on status information of the streaming media buffer node, so that the client obtains a segment of the streaming media based on an address of the streaming media buffer node in the relatively good state to play the streaming media. This prevents the client from obtaining a segment of the streaming media based on an address of a streaming media buffer node in a relatively poor state to play the streaming media, so that frame freezing and frame loss can be avoided when the clients play streaming media content.

In a possible implementation, the streaming media server may select N streaming media buffer nodes with lowest load rates from the M streaming media buffer nodes that buffer the segments of the streaming media.

When N is 1, a load rate of the one selected streaming media buffer node is the lowest in the M streaming media buffer nodes. When N is greater than 1, a load rate of each streaming media buffer node in the N selected streaming media buffer nodes is the lowest in the streaming media buffer nodes that each buffer a part of segments of the streaming media.

For example, one video open class whose duration is 60 minutes may be divided into 60 segments whose duration is 1 minute. A streaming media buffer node A, a streaming media buffer node B, a streaming media buffer node C, and a streaming media buffer node D each store the 60 segments. After receiving a play request that is for the video open class and that is sent by the client, the streaming media server may select one streaming media buffer node (that is, the streaming media buffer node C) with a lowest load rate from the foregoing streaming media buffer nodes based on streaming media buffer node information shown in Table 1, and then generate a streaming media playlist that includes an address (that is, d.com:80) of the media buffer node C.

**Table 1**

| Streaming media buffer nodes | Load information (load rates) | Addresses |
|---|---|---|
| Streaming media buffer node A | 35% | a.com:80 |
| Streaming media buffer node B | 65% | b.com:80 |
| Streaming media buffer node C | 25% | c.com:80 |
| Streaming media buffer node D | 50% | d.com:80 |

For another example, one video release conference whose duration is 15 minutes may be divided into three segments whose duration is 5 minutes. As shown in Table 2, a streaming media buffer node A buffers a segment 1, a streaming media buffer node B buffers a segment 2, and a streaming media buffer node C and a streaming media buffer node D buffer a segment 3. After receiving a play request that is for the video release conference and that is sent by the client, the streaming media server may separately select, from the streaming media buffer nodes based on streaming media buffer node information shown in Table 2, a streaming media buffer node with a lowest load rate in the streaming media buffer node that buffers the segment 1, a streaming media buffer node with a lowest load rate in the streaming media buffer node that buffers the segment 2, and a streaming media buffer node with a lowest load rate in the streaming media buffer nodes that buffer the segment 3 (that is, the streaming media buffer node A, the streaming media buffer node B, and the streaming media buffer node C), and then generate a streaming media playlist that includes addresses (that is, a.com:80, b.com:80, and c.com:80) of the streaming media buffer node A, the streaming media buffer node B, and the streaming media buffer node C.

**Table 2**

| Streaming media buffer nodes | Load information (load rates) | Buffered segments | Addresses |
|---|---|---|---|
| Streaming media buffer node A | 35% | Segment 1 | a.com:80 |
| Streaming media buffer node B | 65% | Segment 2 | b.com:80 |
| Streaming media buffer node C | 25% | Segment 3 | c.com:80 |
| Streaming media buffer node D | 50% | Segment 3 | d.com:80 |

It may be understood that, the client is indicated to obtain the segments of the streaming media based on the addresses of the N streaming media buffer nodes with the lowest load rate to play the streaming media, to prevent the client from obtaining the segment of the streaming media by using a streaming media buffer node with a relatively high load rate, so that phenomena such as frame freezing and frame loss can be avoided when the streaming media clients play the streaming media content. This further improves user experience.

In a possible implementation, the streaming media server may select, based on status information of the M streaming media buffer nodes and attribute information of the M streaming media buffer nodes, N streaming media buffer nodes from the M streaming media buffer nodes that buffer the segments of the streaming media.

Optionally, the foregoing attribute information includes at least one of an inter-node address, attribute parameter information, or streaming media segment content information. The inter-node address may include an IPv4 address and a port number, and an IPv6 address and a port number. The attribute parameter information may include a NAT type, an operator, a network type, and available space of a memory and a disk. The streaming media segment content information may include update time of the segment of the streaming media and load of the node.

For example, one video open class whose duration is 60 minutes may be divided into 60 segments whose duration is 1 minute, and the 60 segments may be stored in the streaming media server and 100 streaming media buffer nodes. After receiving a play request that is for the video open class and that is sent by the client, the streaming media server may first select 30 streaming media buffer nodes whose network types are the dedicated networks from the 100 streaming media buffer nodes that buffer the segments of the video open class, then select 10 streaming media buffer nodes whose load rates are the lowest from the 30 streaming media buffer nodes whose network types are the dedicated networks, and then generate a streaming media playlist that includes addresses of the 10 streaming media buffer nodes.

For another example, one video open class whose duration is 60 minutes may be divided into 60 segments whose duration is 1 minute, and the 60 segments may be stored in the streaming media server and 100 streaming media buffer nodes. After receiving a play request that is for the video open class and that is sent by the client, the streaming media server may first select 70 streaming media buffer nodes that support IPv6 from the 100 streaming media buffer nodes that buffer the segments of the video open class, then select 20 streaming media buffer nodes with lowest load rates from the 70 streaming media buffer nodes that support IPv6, and then generate a streaming media playlist that includes addresses of the 20 streaming media buffer nodes.

Optionally, N may be equal to a quantity of segments of the streaming media. For example, if a video open class includes 60 segments, the streaming media server needs to select 60 streaming media buffer nodes from M streaming media buffer nodes that buffer the segments of the video open class.

It may be understood that, when N is equal to the quantity of segments of the streaming media, the client downloads in parallel different segments by using different streaming media buffer nodes, so that time required by the client to download the segments is shortened. This further improves user experience. For example, a live video includes three segments with sizes of 1 MB. If the client simultaneously downloads the three segments from a same streaming media buffer node whose bandwidth is 10 Mbps, required download time is 2.4 seconds. However, if the client downloads one segment from each of three different streaming media buffer nodes whose bandwidths are all 10 Mbps, required download time is only 0.8 seconds. It can be seen that the time required for downloading the segments is significantly reduced.

Optionally, the streaming media buffer node may store the segments of the streaming media in a distributed storage manner. For example, each streaming media buffer node or each streaming media buffer node set may store only one segment of same streaming media content. The streaming media buffer nodes include a streaming media buffer node A, a streaming media buffer node B, and a streaming media buffer node C, and streaming media content 1 includes a segment 1, a segment 2, and a segment 3. A size of each segment is 1 MB. If each streaming media buffer node stores all segments of the streaming media content 1, a size of required storage space is 3 MB. However, if each streaming media buffer node stores only one segment of the streaming media content 1, a size of required storage space is only 1 MB. For example, the streaming media buffer node A stores the segment 1 of the streaming media, the streaming media buffer node B stores the segment 2 of the streaming media, and the streaming media buffer node C stores the segment 3 of the streaming media.

Optionally, before S202, the client and the streaming media buffer node may send a node registration request to the streaming media server to complete registration. Selecting N streaming media buffer nodes from the M streaming media buffer nodes that buffer the segments of the streaming media may include: selecting N streaming media buffer nodes from L streaming media buffer nodes that are registered and buffer the segments of the streaming media.

It may be understood that, a plurality of streaming media client devices may exist in a streaming media network (a multicast network, an application layer multicast network, or a streaming media application layer multicast network). After the streaming media client devices are registered in the streaming media server device, the streaming media client devices may alternatively transmit the segments of the streaming media to each other. This reduces load of the streaming media server devices and an edge and fog layer streaming media distribution device, and further improves user experience.

S203: The streaming media server sends a streaming media playlist to the client.

The streaming media playlist includes addresses of the N streaming media buffer nodes, and the streaming media playlist indicates the client to obtain the segments of the streaming media based on the addresses of the N streaming media buffer nodes to play the streaming media.

It can be seen that, in the method provided by the present invention, after receiving the play request that is for the one channel of streaming media and that is sent by the client, the streaming media server does not directly indicate the client to obtain the segments of the streaming media based on the address of the streaming media server, but first selects the N streaming media buffer nodes from the M streaming media buffer nodes that buffer the segments of the streaming media, and then sends the streaming media playlist to the client to indicate the client to obtain the segments of the streaming media based on the addresses of the N streaming media buffer nodes to play the streaming media. This prevents a large quantity of clients from simultaneously obtaining the segments of the streaming media from the streaming media server, so that frame freezing and frame loss can be avoided when the streaming media clients play streaming media content. In a process in which the streaming media server selects the streaming media buffer node, no additional signaling needs to be exchanged between the streaming media server and the client, so that the client is unaware of the event. This improves user experience.

In a possible implementation, the streaming media playlist may further include addresses of the K other clients, and the streaming media playlist indicates the client to obtain all segments of the streaming media based on the addresses of the N streaming media buffer nodes and the addresses of the K other clients to play the streaming media.

When the N streaming media buffer nodes buffer all segments of the streaming media, the streaming media playlist indicates the client to obtain all segments of the streaming media based on the addresses of the N streaming media buffer nodes to play the streaming media.

Optionally, the streaming media playlist may further include the quantity of segments, maximum duration and actual duration of the segment, and a file name and address of the segment. The streaming media playlist may use a plurality of types of file formats. For example, the streaming media playlist may be an extended moving picture experts group audio layer 3 uniform resource locator (moving picture experts group audio layer 3 uniform resource locator, M3U) file that includes metadata, or an M3U file in a unicode transformation format (unicode transformation format, UTF)-8 encoding format, namely, an m3u8 file.

For example, one video open class whose duration is 30 minutes may be divided into three segments (that is, a segment 1, a segment 2, and a segment 3) whose duration is 10 minutes. As shown in FIG. 3, a streaming media server sends a video open class playlist to a client, where the video playlist indicates the client to obtain the segment 1 based on an address http://a.com:80 of a streaming media buffer node A, obtain the segment 2 based on an address http://b.com:80 of a streaming media buffer node B, and obtain the segment 3 based on an address http://c.com:80 of a streaming media buffer node C.

In a possible implementation, the streaming media server may alternatively send the attribute information of the M streaming media buffer nodes to the client. After receiving the attribute information of the M streaming media buffer nodes, the client may download the plurality of segments of the streaming media based on the attribute information of the M streaming media buffer nodes.

For example, the streaming media server may send attribute information of 100 streaming media buffer nodes to the client. After receiving the attribute information of the 100 streaming media buffer nodes, the client may first determine an address of each streaming media buffer node based on the attribute information, then test a network latency between the client and each streaming media buffer node based on the address of the streaming media buffer node, and then download a plurality of segments of the streaming media based on an address of a streaming media buffer node with a lowest network latency with the client.

In another possible implementation, the streaming media server may alternatively send the attribute information of the M streaming media buffer nodes and attribute information of the K other clients to the client. After receiving the attribute information of the M streaming media buffer nodes and the attribute information of the K other clients, the client may download the plurality of segments of the streaming media based on the attribute information of the M streaming media buffer nodes and the attribute information of the K other clients.

In still another possible implementation, the streaming media server may alternatively send the streaming media playlist and the attribute information of the M streaming media buffer nodes to the client. After receiving the streaming media playlist and the attribute information of the M streaming media buffer nodes, the client may download the plurality of segments of the streaming media based on the streaming media playlist and the attribute information of the M streaming media buffer nodes.

For example, the streaming media server sends target information to the client, where the target information includes the streaming media playlist and the attribute information of the M streaming media buffer nodes. After receiving the target information, the client may obtain latencies between the client and the N streaming media buffer nodes based on the streaming media playlist, and then download the plurality of segments based on the attribute information of the M streaming media buffer nodes when a latency between the client and any streaming media buffer node in the N streaming media buffer nodes is greater than a latency threshold.

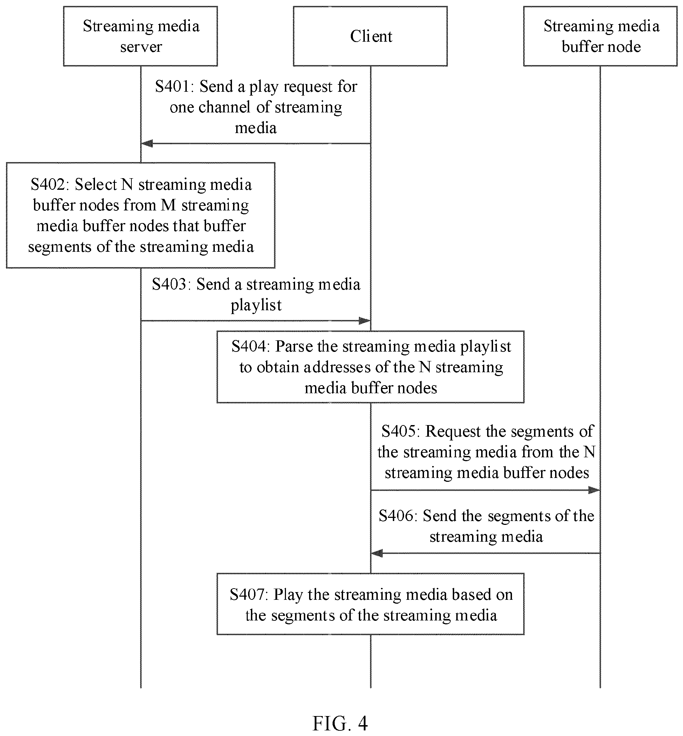

The following describes in detail communication interaction between a streaming media server, a client, and a streaming media buffer node in the streaming media scheduling method provided by this embodiment of the present invention with reference to FIG. 4. The communication interaction between the streaming media server, the client, and the streaming media buffer node specifically includes the following steps.

S401: The client sends a play request for one channel of streaming media to the streaming media server. Correspondingly, the streaming media server receives the sent play request for one channel of streaming media.

For example, if a user wants to watch a video open class by using a mobile phone, the user taps an icon of a streaming media client on the mobile phone, starts the streaming media client to display an interface of the streaming media client, and then taps a video open class page in the interface. A CDN server receives, in response to the operation of the user, a play request that is for the video open class and that is sent by the mobile phone by using the streaming media client.

S402: The streaming media server selects N streaming media buffer nodes from M streaming media buffer nodes that buffer segments of the streaming media.

M is greater than N. When N is 1, the one selected streaming media buffer node buffers all segments of the streaming media. When N is greater than 1, the N selected streaming media buffer nodes each buffer a part of segments of the streaming media.

S403: The streaming media server sends a streaming media playlist to the client.

The streaming media playlist includes addresses of the N streaming media buffer nodes, and the streaming media playlist indicates the client to obtain the segments of the streaming media based on the addresses of the N streaming media buffer nodes to play the streaming media.

S404: The client parses the streaming media playlist to obtain the addresses of the N streaming media buffer nodes.

For example, the client parses a playlist of the video open class to obtain an address http://a.com:80 of a streaming media buffer node A, an address http://b.com:80 of a streaming media buffer node B, and an address http://c.com:80 of a streaming media buffer node C.

S405: The client requests the segments of the streaming media from the N streaming media buffer nodes.

For example, the client requests a segment 1 of the video open class from the streaming media buffer node A based on the address http://a.com:80 of the streaming media buffer node A, requests a segment 2 of the video open class from the streaming media buffer node B based on the address http://b.com:80 of the streaming media buffer node B, and requests a segment 3 of the video open class from the streaming media buffer node C based on the address http://c.com:80 of the streaming media buffer node C.

S406: The streaming media buffer node sends the segments of the streaming media to the client. Correspondingly, the client receives the segment of the streaming media.

For example, the streaming media buffer node A sends the segment 1 of the video open class to the client, the streaming media buffer node B sends the segment 2 of the video open class to the client, and the streaming media buffer node C sends the segment 3 of the video open class to the client. The client receives the segment 1 of the video open class, the segment 2 of the video open class, and the segment 3 of the video open class.

S407: The client plays the streaming media based on the segments of the streaming media.

For example, the client plays the video open class based on the segment 1 of the video open class, the segment 2 of the video open class, and the segment 3 of the video open class.

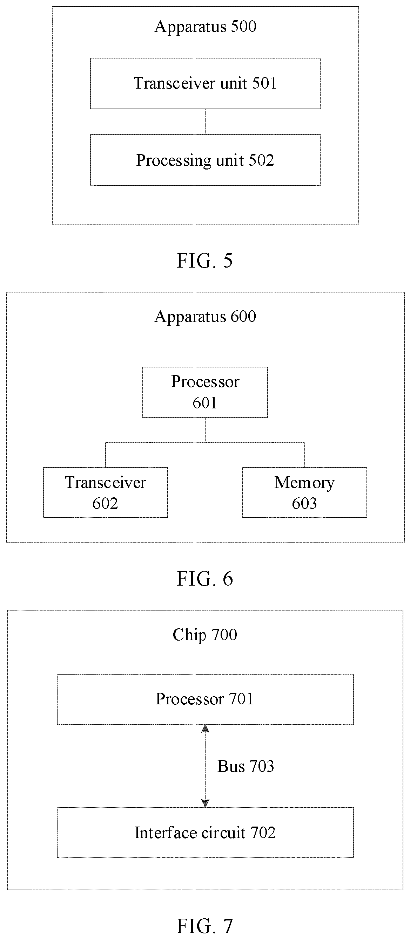

The following describes an electronic device configured to perform the foregoing streaming media scheduling method with reference to FIG. 5 and FIG. 6.

It may be understood that, to implement the foregoing functions, the electronic device includes corresponding hardware and/or software modules for performing the functions. With reference to algorithm steps of examples described in embodiments disclosed in this specification, the present invention can be implemented in a form of hardware or combination of hardware and computer software. Whether a function is performed by hardware or hardware driven by computer software depends on particular applications and design constraints of the technical solutions. A person skilled in the art may use different methods to implement the described functions for each specific application with reference to embodiments, but it should not be considered that the implementation goes beyond the scope of the present invention.

In embodiments of the present invention, the electronic device may be divided into functional modules based on the example in the foregoing method. For example, each functional module corresponding to each function may be obtained through division, or two or more functions may be integrated into one processing module. The integrated module may be implemented in a form of hardware. It should be noted that module division in this embodiment is an example and is merely logical function division. During actual implementation, there may be another division manner.

When each functional module is obtained through division based on each corresponding function, FIG. 5 is a possible schematic diagram of composition of the electronic device in the foregoing embodiment. As shown in FIG. 5, an apparatus 500 may include a transceiver unit 501 and a processing unit 502. The processing unit 502 may implement the method performed by the electronic device in the foregoing method embodiment, and/or another process of the technology described in this specification.

It should be noted that all related content of the steps in the foregoing method embodiments may be cited in function descriptions of corresponding functional modules. Details are not described herein again.

When an integrated unit is used, the apparatus 500 may include a processing unit, a storage unit, and a communication unit. The processing unit may be configured to control and manage an action of the apparatus 500, for example, may be configured to support the apparatus 500 in performing the steps performed by the foregoing units. The storage unit may be configured to support the apparatus 500 in storing program code and/or data, and the like. The communication unit may be configured to support communication between the apparatus 500 and another device.

The processing unit may be a processor or a controller. The processing unit may implement or execute various examples of logical blocks, modules, and circuits described with reference to content disclosed in the present invention. Alternatively, the processor may be a combination for implementing a computing function, for example, a combination of one or more microprocessors, a combination of a digital signal processor (digital signal processor, DSP) and a microprocessor, or the like. The storage unit may be a memory. The communication unit may be specifically a device, for example, a radio frequency circuit, a Bluetooth chip, a Wi-Fi chip, or the like that interacts with another electronic device.

In a possible implementation, the electronic device in this embodiment of the present invention may be an apparatus 600 that has a structure shown in FIG. 6. The apparatus 600 includes a processor 601 and a transceiver 602. A related function implemented by the transceiver unit 501 and the processing unit 502 in FIG. 5 may be implemented by the processor 601.

Optionally, the apparatus 600 may further include a memory 603. The processor 601 and the memory 603 communicate with each other through an internal connection path. A related function implemented by the storage unit in FIG. 5 may be implemented by the memory 603.

This embodiment of the present invention further provides a computer storage medium. The computer storage medium stores computer instructions. When the computer instructions are run on an electronic device, the electronic device is enabled to perform the related method steps, to implement the streaming media scheduling method in the foregoing embodiments.

An embodiment of the present invention further provides a computer program product. When the computer program product is run on a computer, the computer is enabled to perform the foregoing related steps, to implement the streaming media scheduling method in the foregoing embodiments.

An embodiment of the present invention further provides an electronic device. The apparatus may be specifically a chip, an integrated circuit, a component, or a module. Specifically, the apparatus may include a memory configured to store instructions and a processor that are connected to each other, or the apparatus includes at least one processor, configured to obtain instructions from an external memory. When the apparatus is run, the processor may execute the instructions, to enable the chip to perform the streaming media scheduling method in the foregoing method embodiments.

FIG. 7 is a schematic diagram of a structure of a chip 700. A chip 700 includes one or more processors 701 and an interface circuit 702. Optionally, the chip 700 may further include a bus 703.

The processor 701 may be an integrated circuit chip and has a signal processing capability. In an implementation process, steps in the foregoing streaming media scheduling method may be completed by using a hardware integrated logic circuit in the processor 701, or by using instructions in a form of software.

Optionally, the processor 701 may be a general-purpose processor, DSP, an application-specific integrated circuit (application specific integrated circuit, ASIC), a field-programmable gate array (field-programmable gate array, FPGA) or another programmable logic component, a discrete gate or transistor logic component, or a discrete hardware component. The processor 701 may implement or perform the methods and steps that are disclosed in embodiments of the present invention. The general-purpose processor may be a microprocessor, or the processor may be any conventional processor, or the like.

The interface circuit 702 may send or receive data, instructions, or information. The processor 701 may process the data, the instructions, or other information received through the interface circuit 702, and send, through the interface circuit 702, information obtained through processing.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking operation instructions (the operation instructions may be stored in an operating system) stored in the memory.

Optionally, the chip may be used in the electronic device or DOP in embodiments of the present invention. Optionally, the interface circuit 702 may be configured to output an execution result of the processor 701. For the streaming media scheduling method provided in one or more embodiments of the present invention, refer to the foregoing embodiments, and details are not described herein again.

It should be noted that functions corresponding to each of the processor 701 and the interface circuit 702 may be implemented by using a hardware design, may be implemented by using a software design, or may be implemented by using a combination of software and hardware. This is not limited herein.

The apparatus, the computer storage medium, the computer program product, or the chip provided in embodiments are all configured to perform the corresponding method provided above. Therefore, for beneficial effects that can be achieved by the apparatus, the computer storage medium, the computer program product, and the chip, refer to beneficial effects in the corresponding method provided above. Details are not described herein again.

It should be understood that sequence numbers of the foregoing processes do not mean execution sequences in embodiments of the present invention. The execution sequences of the processes should be determined based on functions and internal logic of the processes, and should not constitute any limitation on implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each specific application, but it should not be considered that the implementation goes beyond the scope of the present invention.

A person skilled in the art may clearly understand that, for the purpose of convenient and brief descriptions, for a detailed working process of the foregoing system, apparatus, and unit, refer to a corresponding process in the foregoing method embodiments, and details are not described herein again.

In the several embodiments provided in the present invention, it should be understood that the disclosed system, apparatus, and method may be implemented in another manner. For example, the described apparatus embodiment is merely an example. For example, division of units is merely logical function division and there may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, functional units in embodiments of the present invention may be integrated into one processing unit, or each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of the present invention essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) to perform all or a part of the steps of the methods described in embodiments of the present invention. The storage medium includes any medium that can store program code, such as a USB flash drive, a removable hard disk, a read-only memory (Read Only Memory, ROM), a random access memory (Random Access Memory, RAM), a magnetic disk, or an optical disc.

The foregoing descriptions are merely specific implementations of the present invention, but are not intended to limit the protection scope of the present invention. Therefore, the protection scope of the present invention shall be subject to the protection scope of the claims.

## Claims

1. A streaming media scheduling method, comprising:
receiving (S201), by a streaming media server, a play request that is for one channel of streaming media and that is sent by a client;
selecting (S202), by the streaming media server, N streaming media buffer nodes from M streaming media buffer nodes that buffer segments of the streaming media, wherein M is greater than N, and when N is 1, the one selected streaming media buffer node buffers all segments of the streaming media, or when N is greater than 1, the N selected streaming media buffer nodes each buffer a part of segments of the streaming media; and
sending (S203), by the streaming media server, a streaming media playlist to the client, wherein the streaming media playlist comprises addresses of the N streaming media buffer nodes, and the streaming media playlist indicates the client to obtain the segments of the streaming media based on the addresses of the N streaming media buffer nodes to play the streaming media,
wherein the method further comprises:
determining, by the streaming media server, K other clients that buffer other segments of the streaming media, wherein the streaming media playlist further comprises addresses of the K other clients, and the streaming media playlist indicates the client to obtain all segments of the streaming media based on the addresses of the N streaming media buffer nodes and the addresses of the K other clients to play the streaming media.

2. The method according to claim 1, wherein M, N, and K are all positive integers.

3. The method according to claim 1 or 2, wherein the selecting N streaming media buffer nodes from M streaming media buffer nodes that buffer segments of the streaming media comprises:
selecting, based on status information of the M streaming media buffer nodes, N streaming media buffer nodes from the M streaming media buffer nodes that buffer the segments of the streaming media, wherein the status information comprises at least one of load information, memory utilization, an available memory, storage space utilization, an available storage space, a network type, or streaming media segment storage information.

4. The method according to claim 1 or 2, wherein the selecting N streaming media buffer nodes from M streaming media buffer nodes that buffer segments of the streaming media comprises:
selecting N streaming media buffer nodes with lowest load rates from the M streaming media buffer nodes that buffer the segments of the streaming media, wherein when N is 1, a load rate of the one selected streaming media buffer node is the lowest in the M streaming media buffer nodes, or when N is greater than 1, a load rate of each streaming media buffer node in the N selected streaming media buffer nodes is the lowest in the streaming media buffer nodes that each buffer a part of segments of the streaming media.

5. The method according to claim 1 or 2, wherein the selecting N streaming media buffer nodes from M streaming media buffer nodes that buffer segments of the streaming media comprises:
selecting, based on status information of the M streaming media buffer nodes and attribute information of the M streaming media buffer nodes, N streaming media buffer nodes from the M streaming media buffer nodes that buffer the segments of the streaming media, wherein the status information comprises at least one of load information, memory utilization, an available memory, storage space utilization, an available storage space, a network type, or streaming media segment storage information, and the attribute information comprises at least one of an inter-node address, attribute parameter information, or streaming media segment content information.

6. A streaming media scheduling method, comprising:
receiving (S401), by a client, target information sent by a streaming media server, wherein the target information comprises attribute information of M streaming media buffer nodes, and the attribute information comprises at least one of an inter-node address, attribute parameter information, or streaming media segment content information; and
downloading (S406), by the client, a plurality of segments of streaming media based on the attribute information of the M streaming media buffer nodes,
wherein the target information further comprises attribute information of K other clients, and the downloading a plurality of segments of streaming media based on the attribute information of the M streaming media buffer nodes comprises:
downloading the plurality of segments based on the attribute information of the M streaming media buffer nodes and the attribute information of the K other clients.

7. The method according to claim 6, wherein the target information further comprises a streaming media playlist, and the downloading a plurality of segments of streaming media based on the attribute information of the M streaming media buffer nodes comprises:
downloading the plurality of segments based on the streaming media playlist and the attribute information of the M streaming media buffer nodes, wherein the streaming media playlist comprises addresses ofN streaming media buffer nodes, and the streaming media playlist indicates the client to obtain the segments of the streaming media based on the addresses of the N streaming media buffer nodes to play the streaming media.

8. The method according to claim 7, wherein the downloading the plurality of segments based on the streaming media playlist and the attribute information of the M streaming media buffer nodes comprises:
obtaining latencies between the client and the N streaming media buffer nodes based on the streaming media playlist; and
when a latency between the client and any streaming media buffer node in the N streaming media buffer nodes is greater than a latency threshold, downloading the plurality of segments based on the attribute information of the M streaming media buffer nodes.

9. The method according to any one of claims 6 to 8, wherein M, N, and K are all positive integers.

10. A streaming media scheduling apparatus, wherein the apparatus comprises a processing unit (501), and the processing unit is configured to:
receive a play request that is for one channel of streaming media and that is sent by a client;
select N streaming media buffer nodes from M streaming media buffer nodes that buffer segments of the streaming media, wherein M is greater than N, and when N is 1, the one selected streaming media buffer node buffers all segments of the streaming media, or when N is greater than 1, the N selected streaming media buffer nodes each buffer a part of segments of the streaming media; and
send a streaming media playlist to the client, wherein the streaming media playlist comprises addresses of the N streaming media buffer nodes, and the streaming media playlist indicates the client to obtain the segments of the streaming media based on the addresses of the N streaming media buffer nodes to play the streaming media,
wherein the processing unit is further configured to:
determine K other clients that buffer other segments of the streaming media, wherein the streaming media playlist further comprises addresses of the K other clients, and the streaming media playlist indicates the client to obtain all segments of the streaming media based on the addresses of the N streaming media buffer nodes and the addresses of the K other clients to play the streaming media.

11. The apparatus according to claim 10, wherein M, N, and K are all positive integers.

12. The apparatus according to claim 10 or 11, wherein the processing unit is specifically configured to:
select, based on status information of the M streaming media buffer nodes, N streaming media buffer nodes from the M streaming media buffer nodes that buffer the segments of the streaming media, wherein the status information comprises at least one of load information, memory utilization, an available memory, storage space utilization, an available storage space, a network type, or streaming media segment storage information.

13. The apparatus according to claim 10 or 11, wherein the processing unit is specifically configured to:
select N streaming media buffer nodes with lowest load rates from the M streaming media buffer nodes that buffer the segments of the streaming media, wherein when N is 1, a load rate of the one selected streaming media buffer node is the lowest in the M streaming media buffer nodes, or when N is greater than 1, a load rate of each streaming media buffer node in the N selected streaming media buffer nodes is the lowest in the streaming media buffer nodes that each buffer a part of segments of the streaming media.

14. The apparatus according to claim 10 or 11, wherein the processing unit is specifically configured to:
select, based on status information of the M streaming media buffer nodes and attribute information of the M streaming media buffer nodes, N streaming media buffer nodes from the M streaming media buffer nodes that buffer the segments of the streaming media, wherein the status information comprises at least one of load information, memory utilization, an available memory, storage space utilization, an available storage space, a network type, or streaming media segment storage information, and the attribute information comprises at least one of an inter-node address, attribute parameter information, or streaming media segment content information.

15. A streaming media scheduling apparatus, wherein the apparatus comprises a processing unit, and the processing unit is configured to:
receive target information sent by a streaming media server, wherein the target information comprises attribute information of M streaming media buffer nodes, and the attribute information comprises at least one of an inter-node address, attribute parameter information, or streaming media segment content information; and
download a plurality of segments of streaming media based on the attribute information of the M streaming media buffer nodes,
wherein the target information further comprises attribute information of K other clients, and the processing unit is specifically configured to:
download the plurality of segments based on the attribute information of the M streaming media buffer nodes and the attribute information of the K other clients.

16. The apparatus according to claim 15, wherein the target information further comprises a streaming media playlist, and the processing unit is specifically configured to:
download the plurality of segments based on the streaming media playlist and the attribute information of the M streaming media buffer nodes, wherein the streaming media playlist comprises addresses ofN streaming media buffer nodes, and the streaming media playlist indicates the client to obtain the segments of the streaming media based on the addresses of the N streaming media buffer nodes to play the streaming media.

17. The apparatus according to claim 16, wherein the processing unit is specifically configured to:
obtain latencies between the client and the N streaming media buffer nodes based on the streaming media playlist; and
when a latency between the client and any streaming media buffer node in the N streaming media buffer nodes is greater than a latency threshold, download the plurality of segments based on the attribute information of the M streaming media buffer nodes.

18. The apparatus according to any one claims 15 to 17, wherein M, N, and K are all positive integers.

19. A computer-readable storage medium, configured to store a computer program, wherein the computer program comprises instructions for implementing the method according to any one of claims 1 to 5 or any one of claims 6 to 9.

20. A computer program product, wherein the computer program product comprises instructions, and when the instructions are run on a computer or processor, the computer or the processor is enabled to implement the method according to any one of claims 1 to 5 or any one of claims 6 to 9.

## Patentansprüche

1. Verfahren zur Streaming-Medienplanung, umfassend:
Empfangen (S201) einer Wiedergabeanforderung durch einen Streaming-Medienserver, die für einen Streaming-Medienkanal dient und die durch einen Client gesendet wird;
Auswählen (S202) von N Streaming-Medienpufferknoten aus M Streaming-Medienpufferknoten, die Segmente der Streaming-Medien puffern, durch den Streaming-Medienserver, wobei M größer als N ist und, wenn N 1 ist, der eine ausgewählte Streaming-Medienpufferknoten alle Segmente der Streaming-Medien puffert, oder, wenn N größer als 1 ist, die N ausgewählten Streaming-Medienpufferknoten jeweils einen Teil von Segmenten der Streaming-Medien puffern; und
Senden (S203) einer Streaming-Medienwiedergabeliste durch den Streaming-Medienserver an den Client, wobei die Streaming-Medienwiedergabeliste Adressen der N Streaming-Medienpufferknoten umfasst und die Streaming-Medienwiedergabeliste dem Client angibt, die Segmente der Streaming-Medien basierend auf den Adressen der N Streaming-Medienpufferknoten zu erlangen, um die Streaming-Medien wiederzugeben,
wobei das Verfahren ferner Folgendes umfasst:
Bestimmen von K anderen Clients, die andere Segmente der Streaming-Medien puffern, durch den Streaming-Medienserver, wobei die Streaming-Medienwiedergabeliste ferner Adressen der K anderen Clients umfasst und die Streaming-Medienwiedergabeliste den Client angibt, alle Segmente der Streaming-Medien basierend auf den Adressen der N Streaming-Medienpufferknoten und den Adressen der K anderen Clients zu erlangen, um die Streaming-Medien wiederzugeben.

2. Verfahren nach Anspruch 1, wobei M, N und K alle positive ganze Zahlen sind.

3. Verfahren nach Anspruch 1 oder 2, wobei das Auswählen von N Streaming-Medienpufferknoten aus M Streaming-Medienpufferknoten, die Segmente der Streaming-Medien puffern, Folgendes umfasst:
Auswählen von N Streaming-Medienpufferknoten aus den M Streaming-Medienpufferknoten, welche die Segmente der Streaming-Medien puffern, basierend auf Statusinformationen der M Streaming-Medienpufferknoten, wobei die Statusinformationen mindestens eines von Lastinformationen, Speicherauslastung, einem verfügbaren Speicher, Speicherplatzauslastung, einem verfügbaren Speicherplatz, einem Netzwerktyp oder Speicherinformationen von Streaming-Mediensegmenten umfassen.

4. Verfahren nach Anspruch 1 oder 2, wobei das Auswählen von N Streaming-Medienpufferknoten aus M Streaming-Medienpufferknoten, die Segmente der Streaming-Medien puffern, Folgendes umfasst:
Auswählen von N Streaming-Medienpufferknoten mit niedrigsten Lastraten aus den M Streaming-Medienpufferknoten, welche die Segmente der Streaming-Medien puffern, wobei, wenn N 1 ist, eine Lastrate des einen ausgewählten Streaming-Medienpufferknotens die niedrigste unter den M Streaming-Medienpufferknoten ist, oder, wenn N größer als 1 ist, eine Lastrate jedes Streaming-Medienpufferknotens unter den N ausgewählten Streaming-Medienpufferknoten die niedrigste unter den Streaming-Medienpufferknoten ist, die jeweils einen Teil von Segmenten der Streaming-Medien puffern.

5. Verfahren nach Anspruch 1 oder 2, wobei das Auswählen von N Streaming-Medienpufferknoten aus M Streaming-Medienpufferknoten, die Segmente der Streaming-Medien puffern, Folgendes umfasst:
Auswählen von N Streaming-Medienpufferknoten aus den M Streaming-Medienpufferknoten, welche die Segmente der Streaming-Medien puffern, basierend auf Statusinformationen der M Streaming-Medienpufferknoten und Attributinformationen der M Streaming-Medienpufferknoten, wobei die Statusinformationen mindestens eines von Lastinformationen, Speicherauslastung, einem verfügbaren Speicher, Speicherplatzauslastung, einem verfügbaren Speicherplatz, einem Netzwerktyp oder Speicherinformationen von Streaming-Mediensegmenten umfassen, und die Attributinformationen mindestens eines von einer Interknotenadresse, Attributparameterinformationen oder Informationen zu Inhalten von Streaming-Mediensegmenten umfassen.

6. Verfahren zur Streaming-Medienplanung, umfassend:
Empfangen (S401) von Zielinformationen, die durch einen Streaming-Medienserver gesendet werden, durch einen Client, wobei die Zielinformationen Attributinformationen von M Streaming-Medienpufferknoten umfassen und die Attributinformationen mindestens eines von einer Interknotenadresse, Attributparameterinformationen oder Informationen zu Inhalten von Streaming-Mediensegmenten umfassen; und
Herunterladen (S406) einer Vielzahl von Streaming-Mediensegmenten durch den Client basierend auf den Attributinformationen der M Streaming-Medienpufferknoten,
wobei die Zielinformationen ferner Attributinformationen von K anderen Clients umfassen und das Herunterladen einer Vielzahl von Streaming-Mediensegmenten basierend auf den Attributinformationen der M Streaming-Medienpufferknoten Folgendes umfasst:
Herunterladen der Vielzahl von Segmenten basierend auf den Attributinformationen der M Streaming-Medienpufferknoten und den Attributinformationen der K anderen Clients.

7. Verfahren nach Anspruch 6, wobei die Zielinformationen ferner eine Streaming-Medienwiedergabeliste umfassen und das Herunterladen einer Vielzahl von Streaming-Mediensegmenten basierend auf den Attributinformationen der M Streaming-Medienpufferknoten Folgendes umfasst:
Herunterladen der Vielzahl von Segmenten basierend auf der Streaming-Medienwiedergabeliste und den Attributinformationen der M Streaming-Medienpufferknoten, wobei die Streaming-Medienwiedergabeliste Adressen von N Streaming-Medienpufferknoten umfasst und die Streaming-Medienwiedergabeliste dem Client angibt, die Segmente der Streaming-Medien basierend auf den Adressen der N Streaming-Medienpufferknoten zu erlangen, um die Streaming-Medien wiederzugeben.

8. Verfahren nach Anspruch 7, wobei das Herunterladen der Vielzahl von Segmenten basierend auf der Streaming-Medienwiedergabeliste und den Attributinformationen der M Streaming-Medienpufferknoten Folgendes umfasst:
Erlangen von Latenzen zwischen dem Client und den N Streaming-Medienpufferknoten basierend auf der Streaming-Medienwiedergabeliste; und
wenn eine Latenz zwischen dem Client und einem beliebigen Streaming-Medienpufferknoten unter den N Streaming-Medienpufferknoten größer als ein Latenzschwellenwert ist, Herunterladen der Vielzahl von Segmenten basierend auf den Attributinformationen der M Streaming-Medienpufferknoten.

9. Verfahren nach einem der Ansprüche 6 bis 8, wobei M, N und K alle positive ganze Zahlen sind.

10. Vorrichtung zur Streaming-Medienplanung, wobei die Vorrichtung eine Verarbeitungseinheit (501) umfasst und die Verarbeitungseinheit dazu konfiguriert ist:
eine Wiedergabeanforderung, die für einen Streaming-Medienkanal dient und die durch einen Client gesendet wird, zu empfangen;
N Streaming-Medienpufferknoten aus M Streaming-Medienpufferknoten, die Segmente der Streaming-Medien puffern, auszuwählen, wobei M größer als N ist und, wenn N 1 ist, der eine ausgewählte Streaming-Medienpufferknoten alle Segmente der Streaming-Medien puffert, oder, wenn N größer als 1 ist, die N ausgewählten Streaming-Medienpufferknoten jeweils einen Teil von Segmenten der Streaming-Medien puffern; und
eine Streaming-Medienwiedergabeliste an den Client zu senden, wobei die Streaming-Medienwiedergabeliste Adressen der N Streaming-Medienpufferknoten umfasst und die Streaming-Medienwiedergabeliste dem Client angibt, die Segmente der Streaming-Medien basierend auf den Adressen der N Streaming-Medienpufferknoten zu erlangen, um die Streaming-Medien wiederzugeben,
wobei die Verarbeitungseinheit ferner dazu konfiguriert ist:
K andere Clients zu bestimmen, die andere Segmente der Streaming-Medien puffern, wobei die Streaming-Medienwiedergabeliste ferner Adressen der K anderen Clients umfasst und die Streaming-Medienwiedergabeliste den Client angibt, alle Segmente der Streaming-Medien basierend auf den Adressen der N Streaming-Medienpufferknoten und den Adressen der K anderen Clients zu erlangen, um die Streaming-Medien wiederzugeben.

11. Vorrichtung nach Anspruch 10, wobei M, N und K alle positive ganze Zahlen sind.

12. Vorrichtung nach Anspruch 10 oder 11, wobei die Verarbeitungseinheit speziell dazu konfiguriert ist:
N Streaming-Medienpufferknoten aus den M Streaming-Medienpufferknoten, welche die Segmente der Streaming-Medien puffern, basierend auf Statusinformationen der M Streaming-Medienpufferknoten auszuwählen, wobei die Statusinformationen mindestens eines von Lastinformationen, Speicherauslastung, einem verfügbaren Speicher, Speicherplatzauslastung, einem verfügbaren Speicherplatz, einem Netzwerktyp oder Speicherinformationen von Streaming-Mediensegmenten umfassen.

13. Vorrichtung nach Anspruch 10 oder 11, wobei die Verarbeitungseinheit speziell dazu konfiguriert ist:
N Streaming-Medienpufferknoten mit niedrigsten Lastraten aus den M Streaming-Medienpufferknoten, welche die Segmente der Streaming-Medien puffern, auszuwählen, wobei, wenn N 1 ist, eine Lastrate des einen ausgewählten Streaming-Medienpufferknotens die niedrigste unter den M Streaming-Medienpufferknoten ist, oder, wenn N größer als 1 ist, eine Lastrate jedes Streaming-Medienpufferknotens unter den N ausgewählten Streaming-Medienpufferknoten die niedrigste unter den Streaming-Medienpufferknoten ist, die jeweils einen Teil von Segmenten der Streaming-Medien puffern.

14. Vorrichtung nach Anspruch 10 oder 11, wobei die Verarbeitungseinheit speziell dazu konfiguriert ist:
N Streaming-Medienpufferknoten aus den M Streaming-Medienpufferknoten, welche die Segmente der Streaming-Medien puffern, basierend auf Statusinformationen der M Streaming-Medienpufferknoten und Attributinformationen der M Streaming-Medienpufferknoten auszuwählen, wobei die Statusinformationen mindestens eines von Lastinformationen, Speicherauslastung, einem verfügbaren Speicher, Speicherplatzauslastung, einem verfügbaren Speicherplatz, einem Netzwerktyp oder Speicherinformationen von Streaming-Mediensegmenten umfassen, und die Attributinformationen mindestens eines von einer Interknotenadresse, Attributparameterinformationen oder Informationen zu Inhalten von Streaming-Mediensegmenten umfassen.

15. Vorrichtung zur Streaming-Medienplanung, wobei die Vorrichtung eine Verarbeitungseinheit umfasst und die Verarbeitungseinheit dazu konfiguriert ist:
Zielinformationen, die durch einen Streaming-Medienserver gesendet werden, zu empfangen, wobei die Zielinformationen Attributinformationen von M Streaming-Medienpufferknoten umfassen und die Attributinformationen mindestens eines von einer Interknotenadresse, Attributparameterinformationen oder Informationen zu Inhalten von Streaming-Mediensegmenten umfassen; und
eine Vielzahl von Streaming-Mediensegmenten basierend auf den Attributinformationen der M Streaming-Medienpufferknoten herunterzuladen,
wobei die Zielinformationen ferner Attributinformationen von K anderen Clients umfassen und die Verarbeitungseinheit speziell dazu konfiguriert ist:
die Vielzahl von Segmenten basierend auf den Attributinformationen der M Streaming-Medienpufferknoten und den Attributinformationen der K anderen Clients herunterzuladen.

16. Vorrichtung nach Anspruch 15, wobei die Zielinformationen ferner eine Streaming-Medienwiedergabeliste umfassen und die Verarbeitungseinheit speziell dazu konfiguriert ist:
die Vielzahl von Segmenten basierend auf der Streaming-Medienwiedergabeliste und den Attributinformationen der M Streaming-Medienpufferknoten herunterzuladen, wobei die Streaming-Medienwiedergabeliste Adressen von N Streaming-Medienpufferknoten umfasst und die Streaming-Medienwiedergabeliste dem Client angibt, die Segmente der Streaming-Medien basierend auf den Adressen der N Streaming-Medienpufferknoten zu erlangen, um die Streaming-Medien wiederzugeben.

17. Vorrichtung nach Anspruch 16, wobei die Verarbeitungseinheit speziell dazu konfiguriert ist:
Latenzen zwischen dem Client und den N Streaming-Medienpufferknoten basierend auf der Streaming-Medienwiedergabeliste zu erlangen; und
wenn eine Latenz zwischen dem Client und einem beliebigen Streaming-Medienpufferknoten unter den N Streaming-Medienpufferknoten größer als ein Latenzschwellenwert ist, die Vielzahl von Segmenten basierend auf den Attributinformationen der M Streaming-Medienpufferknoten herunterzuladen.

18. Vorrichtung nach einem der Ansprüche 15 bis 17, wobei M, N und K alle positive ganze Zahlen sind.

19. Computerlesbares Speichermedium, das dazu konfiguriert ist, ein Computerprogramm zu speichern, wobei das Computerprogramm Anweisungen zum Implementieren des Verfahrens nach einem der Ansprüche 1 bis 5 oder einem der Ansprüche 6 bis 9 umfasst.

20. Computerprogrammprodukt, wobei das Computerprogrammprodukt Anweisungen umfasst und, wenn die Anweisungen auf einem Computer oder Prozessor ausgeführt werden, der Computer oder der Prozessor in die Lage versetzt wird, das Verfahren nach einem der Ansprüche 1 bis 5 oder einem der Ansprüche 6 bis 9 zu implementieren.

## Revendications

1. Procédé de programmation de diffusion en continu de contenu multimédia, comprenant :
la réception (S201), par un serveur de diffusion en continu de contenu multimédia, d'une demande de lecture qui est pour un canal de diffusion en continu de contenu multimédia et qui est envoyée par un client ;
la sélection (S202), par le serveur de diffusion en continu de contenu multimédia, de N nœuds tampons de diffusion en continu de contenu multimédia parmi M nœuds tampons de diffusion en continu de contenu multimédia qui mettent en mémoire tampon des segments de la diffusion en continu de contenu multimédia, dans lequel M est supérieur à N, et lorsque N est 1, le nœud tampon de diffusion en continu de contenu multimédia sélectionné met en mémoire tampon tous les segments de la diffusion en continu de contenu multimédia, ou lorsque N est supérieur à 1, les N nœuds tampons de diffusion en continu de contenu multimédia sélectionnés mettent chacun en mémoire tampon une partie des segments de la diffusion en continu de contenu multimédia ; et
l'envoi (S203), par le serveur de diffusion en continu de contenu multimédia, d'une liste de lecture de diffusion en continu de contenu multimédia au client, dans lequel la liste de lecture de diffusion en continu de contenu multimédia comprend des adresses des N nœuds tampons de diffusion en continu de contenu multimédia, et la liste de lecture de diffusion en continu de contenu multimédia indique le client pour obtenir les segments de la diffusion en continu de contenu multimédia sur la base des adresses des N nœuds tampons de diffusion en continu de contenu multimédia pour lire la diffusion en continu de contenu multimédia,
dans lequel le procédé comprend également :
la détermination, par le serveur de diffusion en continu de contenu multimédia, de K autres clients qui mettent en mémoire tampon d'autres segments de la diffusion en continu de contenu multimédia, dans lequel la liste de lecture de diffusion en continu de contenu multimédia comprend également des adresses des K autres clients, et la liste de lecture de diffusion en continu de contenu multimédia indique le client pour obtenir tous les segments de la diffusion en continu de contenu multimédia sur la base des adresses des N nœuds de mémoire tampon de diffusion en continu de contenu multimédia et des adresses des K autres clients pour lire la diffusion en continu de contenu multimédia.

2. Procédé selon la revendication 1, dans lequel M, N, et K sont tous des entiers positifs.

3. Procédé selon la revendication 1 ou 2, dans lequel la sélection de N nœuds tampons de diffusion en continu de contenu multimédia parmi M nœuds tampons de diffusion en continu de contenu multimédia qui mettent en mémoire tampon des segments de diffusion en continu de contenu multimédia comprend :
la sélection, sur la base d'informations d'état des M nœuds tampons de diffusion en continu de contenu multimédia, de N nœuds tampons de diffusion en continu de contenu multimédia parmi les M nœuds tampons de diffusion en continu de contenu multimédia qui mettent en mémoire tampon les segments de la diffusion en continu de contenu multimédia, dans lequel les informations d'état comprennent au moins l'un des éléments suivants : des informations de charge, l'utilisation de la mémoire, une mémoire disponible, l'utilisation de l'espace de stockage, un espace de stockage disponible, un type de réseau, ou des informations de stockage de segment de diffusion en continu de contenu multimédia.

4. Procédé selon la revendication 1 ou 2, dans lequel la sélection de N nœuds tampons de diffusion en continu de contenu multimédia parmi M nœuds tampons de diffusion en continu de contenu multimédia qui mettent en mémoire tampon des segments de diffusion en continu de contenu multimédia comprend :
la sélection de N nœuds tampons de diffusion en continu de contenu multimédia avec les taux de charge les plus bas parmi les M nœuds tampons de diffusion en continu de contenu multimédia qui mettent en mémoire tampon les segments de la diffusion en continu de contenu multimédia, dans lequel lorsque N est 1, un taux de charge du nœud tampon de diffusion en continu de contenu multimédia sélectionné est le plus bas des M nœuds tampons de diffusion en continu de contenu multimédia, ou lorsque N est supérieur à 1, un taux de charge de chaque nœud tampon de diffusion en continu de contenu multimédia des N nœuds tampons de diffusion en continu de contenu multimédia sélectionnés est le plus bas des nœuds tampons de diffusion en continu de contenu multimédia qui mettent chacun en mémoire tampon une partie de segments de la diffusion en continu de contenu multimédia.

5. Procédé selon la revendication 1 ou 2, dans lequel la sélection de N nœuds tampons de diffusion en continu de contenu multimédia parmi M nœuds tampons de diffusion en continu de contenu multimédia qui mettent en mémoire tampon des segments de diffusion en continu de contenu multimédia comprend :
la sélection, sur la base d'informations d'état des M nœuds tampons de diffusion en continu de contenu multimédia et d'informations d'attribut des M nœuds tampons de diffusion en continu de contenu multimédia, de N nœuds tampons de diffusion en continu de contenu multimédia parmi les M nœuds tampons de diffusion en continu de contenu multimédia qui mettent en mémoire tampon les segments de la diffusion en continu de contenu multimédia, dans lequel les informations d'état comprennent au moins l'un des éléments suivants : des informations de charge, l'utilisation de la mémoire, une mémoire disponible, l'utilisation de l'espace de stockage, un espace de stockage disponible, un type de réseau, ou des informations de stockage de segment de diffusion en continu de contenu multimédia, et les informations d'attribut comprennent au moins l'un des éléments suivants : une adresse inter-nœud, des informations de paramètre d'attribut, ou des informations de contenu de segment de diffusion en continu de contenu multimédia.

6. Procédé de programmation de diffusion en continu de contenu multimédia, comprenant :
la réception (S401), par un client, d'informations cibles envoyées par un serveur de diffusion en continu de contenu multimédia, dans lequel les informations cibles comprennent des informations d'attribut de M nœuds tampons de diffusion en continu de contenu multimédia, et les informations d'attribut comprennent au moins l'un des éléments suivants : une adresse inter-nœud, des informations de paramètre d'attribut, ou des informations de contenu de segment de diffusion en continu de contenu multimédia ; et
le téléchargement (S406), par le client, d'une pluralité de segments de diffusion en continu de contenu multimédia sur la base des informations d'attribut des M nœuds de mémoire tampon de diffusion en continu de contenu multimédia,
dans lequel les informations cibles comprennent également des informations d'attribut de K autres clients, et le téléchargement d'une pluralité de segments de diffusion en continu de contenu multimédia sur la base des informations d'attribut des M nœuds tampons de diffusion en continu de contenu multimédia comprend :
le téléchargement de la pluralité de segments sur la base des informations d'attribut des M nœuds tampons de diffusion en continu de contenu multimédia et des informations d'attribut des K autres clients.

7. Procédé selon la revendication 6, dans lequel les informations cibles comprennent également une liste de lecture de diffusion en continu de contenu multimédia, et le téléchargement d'une pluralité de segments de diffusion en continu de contenu multimédia sur la base des informations d'attribut des M nœuds tampons de diffusion en continu de contenu multimédia comprend :
le téléchargement de la pluralité de segments sur la base de la liste de lecture de diffusion en continu de contenu multimédia et des informations d'attribut des M nœuds tampons de diffusion en continu de contenu multimédia, dans lequel la liste de lecture de diffusion en continu de contenu multimédia comprend des adresses de N nœuds tampons de diffusion en continu de contenu multimédia, et la liste de lecture de diffusion en continu de contenu multimédia indique le client pour obtenir les segments de la diffusion en continu de contenu multimédia sur la base des adresses des N nœuds tampons de diffusion en continu de contenu multimédia pour lire la diffusion en continu de contenu multimédia.

8. Procédé selon la revendication 7, dans lequel le téléchargement de la pluralité de segments sur la base de la liste de lecture de diffusion en continu de contenu multimédia et les informations d'attribut des M nœuds tampons de diffusion en continu de contenu multimédia, comprend :
l'obtention de latences entre le client et les N nœuds tampons de diffusion en continu de contenu multimédia sur la base de la liste de lecture de diffusion en continu de contenu multimédia ; et
lorsqu'une latence entre le client et un nœud tampon de diffusion en continu de contenu multimédia dans les N nœuds tampons de diffusion en continu de contenu multimédia est supérieure à un seuil de latence, le téléchargement de la pluralité de segments sur la base des informations d'attribut des M nœuds tampons de diffusion en continu de contenu multimédia.

9. Procédé selon l'une quelconque des revendications 6 à 8, dans lequel M, N, et K sont tous des entiers positifs.

10. Appareil de programmation de diffusion en continu de contenu multimédia, dans lequel l'appareil comprend une unité de traitement (501), et l'unité de traitement est configurée pour :
recevoir une demande de lecture qui est pour une chaîne de diffusion en continu de contenu multimédia et qui est envoyée par un client ;
sélectionner N nœuds tampons de diffusion en continu de contenu multimédia parmi M nœuds tampons de diffusion en continu de contenu multimédia qui mettent en mémoire tampon des segments de la diffusion en continu de contenu multimédia, dans lequel M est supérieur à N, et lorsque N est 1, le nœud tampon de diffusion en continu de contenu multimédia sélectionné met en mémoire tampon tous les segments de la diffusion en continu de contenu multimédia, ou lorsque N est supérieur à 1, les N nœuds tampons de diffusion en continu de contenu multimédia sélectionnés mettent chacun en mémoire tampon une partie des segments de la diffusion en continu de contenu multimédia ; et
envoyer une liste de lecture de diffusion en continu de contenu multimédia au client, dans lequel la liste de lecture de diffusion en continu de contenu multimédia comprend des adresses des N nœuds tampons de diffusion en continu de contenu multimédia, et la liste de lecture de diffusion en continu de contenu multimédia indique le client pour obtenir les segments de la diffusion en continu de contenu multimédia sur la base des adresses des N nœuds tampons de diffusion en continu de contenu multimédia pour lire la diffusion en continu de contenu multimédia,
dans lequel l'unité de traitement est également configurée pour :
déterminer K autres clients qui mettent en mémoire tampon d'autres segments de la diffusion en continu de contenu multimédia, dans lequel la liste de lecture de diffusion en continu de contenu multimédia comprend également des adresses des K autres clients, et la liste de lecture de diffusion en continu de contenu multimédia indique le client pour obtenir tous les segments de la diffusion en continu de contenu multimédia sur la base des adresses des N nœuds de mémoire tampon de diffusion en continu de contenu multimédia et des adresses des K autres clients pour lire la diffusion en continu de contenu multimédia.

11. Appareil selon la revendication 10, dans lequel M, N et K sont tous des entiers positifs.

12. Appareil selon la revendication 10 ou 11, dans lequel l'unité de traitement est spécifiquement configurée pour :
sélectionner, sur la base d'informations d'état des M nœuds tampons de diffusion en continu de contenu multimédia, N nœuds tampons de diffusion en continu de contenu multimédia parmi les M nœuds tampons de diffusion en continu de contenu multimédia qui mettent en mémoire tampon les segments de la diffusion en continu de contenu multimédia, dans lequel les informations d'état comprennent au moins l'un des éléments suivants : des informations de charge, l'utilisation de la mémoire, une mémoire disponible, l'utilisation de l'espace de stockage, un espace de stockage disponible, un type de réseau, ou des informations de stockage de segment de diffusion en continu de contenu multimédia.

13. Appareil selon la revendication 10 ou 11, dans lequel l'unité de traitement est spécifiquement configurée pour :
sélectionner N nœuds tampons de diffusion en continu de contenu multimédia avec les taux de charge les plus bas parmi les M nœuds tampons de diffusion en continu de contenu multimédia qui mettent en mémoire tampon les segments de la diffusion en continu de contenu multimédia, dans lequel lorsque N est 1, un taux de charge du nœud tampon de diffusion en continu de contenu multimédia sélectionné est le plus bas des M nœuds tampons de diffusion en continu de contenu multimédia, ou lorsque N est supérieur à 1, un taux de charge de chaque nœud tampon de diffusion en continu de contenu multimédia des N nœuds tampons de diffusion en continu de contenu multimédia sélectionnés est le plus bas des nœuds tampons de diffusion en continu de contenu multimédia qui mettent chacun en mémoire tampon une partie de segments de la diffusion en continu de contenu multimédia.

14. Appareil selon la revendication 10 ou 11, dans lequel l'unité de traitement est spécifiquement configurée pour :
sélectionner, sur la base d'informations d'état des M nœuds tampons de diffusion en continu de contenu multimédia et d'informations d'attribut des M nœuds tampons de diffusion en continu de contenu multimédia, N nœuds tampons de diffusion en continu de contenu multimédia parmi les M nœuds tampons de diffusion en continu de contenu multimédia qui mettent en mémoire tampon les segments de la diffusion en continu de contenu multimédia, dans lequel les informations d'état comprennent au moins l'un des éléments suivants : des informations de charge, l'utilisation de la mémoire, une mémoire disponible, l'utilisation de l'espace de stockage, un espace de stockage disponible, un type de réseau, ou des informations de stockage de segment de diffusion en continu de contenu multimédia, et les informations d'attribut comprennent au moins l'un des éléments suivants : une adresse inter-nœud, des informations de paramètre d'attribut, ou des informations de contenu de segment de diffusion en continu de contenu multimédia.

15. Appareil de programmation de diffusion en continu de contenu multimédia, dans lequel l'appareil comprend une unité de traitement, et l'unité de traitement est configurée pour :
recevoir des informations cibles envoyées par un serveur de diffusion en continu de contenu multimédia, dans lequel les informations cibles comprennent des informations d'attribut de M nœuds tampons de diffusion en continu de contenu multimédia, et les informations d'attribut comprennent au moins l'un des éléments suivants : une adresse inter-nœud, des informations de paramètre d'attribut, ou des informations de contenu de segment de diffusion en continu de contenu multimédia ; et
télécharger une pluralité de segments de diffusion en continu de contenu multimédia sur la base des informations d'attribut des M nœuds de mémoire tampon de diffusion en continu de contenu multimédia,
dans lequel les informations cibles comprennent également des informations d'attribut de K autres clients, et l'unité de traitement est spécifiquement configurée pour :
télécharger la pluralité de segments sur la base des informations d'attribut des M nœuds tampons de diffusion en continu de contenu multimédia et des informations d'attribut des K autres clients.

16. Appareil de selon la revendication 15, dans lequel les informations cibles comprennent également une liste de lecture de diffusion en continu de contenu multimédia, et l'unité de traitement est spécifiquement configurée pour :
télécharger la pluralité de segments sur la base de la liste de lecture de diffusion en continu de contenu multimédia et des informations d'attribut des M nœuds tampons de diffusion en continu de contenu multimédia, dans lequel la liste de lecture de diffusion en continu de contenu multimédia comprend des adresses de N nœuds tampons de diffusion en continu de contenu multimédia, et la liste de lecture de diffusion en continu de contenu multimédia indique le client pour obtenir les segments de la diffusion en continu de contenu multimédia sur la base des adresses des N nœuds tampons de diffusion en continu de contenu multimédia pour lire la diffusion en continu de contenu multimédia.

17. Appareil selon la revendication 16, dans lequel l'unité de traitement est spécifiquement configurée pour :
obtenir des latences entre le client et les N nœuds tampons de diffusion en continu de contenu multimédia sur la base de la liste de lecture de diffusion en continu de contenu multimédia ; et
lorsqu'une latence entre le client et un nœud tampon de diffusion en continu de contenu multimédia dans les N nœuds tampons de diffusion en continu de contenu multimédia est supérieure à un seuil de latence, télécharger la pluralité de segments sur la base des informations d'attribut des M nœuds tampons de diffusion en continu de contenu multimédia.

18. Appareil selon l'une quelconque des revendications 15 à 17, dans lequel M, N et K sont tous des entiers positifs.

19. Support de stockage lisible par ordinateur, configuré pour stocker un programme informatique, dans lequel le programme informatique comprend des instructions pour la mise en œuvre du procédé selon l'une quelconque des revendications 1 à 5 ou l'une quelconque des revendications 6 à 9.

20. Produit de programme informatique, dans lequel le produit de programme informatique comprend des instructions, et lorsque les instructions fonctionnent sur un ordinateur ou un processeur, l'ordinateur ou le processeur est activé pour mettre en œuvre le procédé selon l'une quelconque des revendications 1 à 5, ou l'une quelconque des revendications 6 à 9.
